Europäisches Patentamt

European Patent Office

Office européen des brevets

(11) Publication number: **0 286 942**
**A2**

## EUROPEAN PATENT APPLICATION

②' Application number: **88105391.2**

(22) Date of filing: **05.04.88**

(51) Int. Cl.⁴ **C08G 59/68 , C08J 5/24**

(30) Priority: **13.04.87 IT 2008987**

(43) Date of publication of application:
**19.10.88 Bulletin 88/42**

(84) Designated Contracting States:
**AT BE CH DE ES FR GB GR IT LI LU NL SE**

(71) Applicant: **STAC SRL**
**via S. Faustino 64**
**Milano(IT)**

(72) Inventor: **Marinelli, Giuseppe**
**via Abeti 24**
**Milano(IT)**

(74) Representative: **Gervasi, Gemma, Dr.**
**Studio Brevetti e Marchi NOTARBARTOLO &**
**GERVASI 33, Viale Bianca Maria**
**I-20122 Milano(IT)**

(54) **Prepregs with epoxide matrix.**

㊐ Prepregs with an epoxy resin matrix are described containing one or more catalysts chosen from the group consisting of complexes of boron trifluoride with phenylamine, diphenylamine and 4-chlorophenylamine.

The prepregs according to the invention are suitable for transformation into finished pieces having excellent mechanical characteristics by moulding.

EP 0 286 942 A2

## PREPREGS WITH EPOXIDE MATRIX

This invention relates to prepregs with an epoxide matrix.

For some decades, objects have been produced in composite material consisting of synthetic, natural or other woven or non-woven fibres and a matrix of thermosetting synthetic resins, in particular polyesters or epoxy resins.

The simplest and still most widely used method for forming composite objects consists of manually impregnating fabric or mat in or over a mould with a resin having a viscosity such as to enable this procedure to be carried out at ambient temperature or at only moderate temperature compatible with the manual requirements of the procedure.

When the object has been formed, it is left for the time necessary for hardening the resin matrix, which takes place within adding heat (ambient temperature) if the curing reaction is reasonably fast at ambient temperature, or by heating the mould (40-50°C) if the curing reaction is sufficiently fast only at higher than ambient temperature (but compatible with manual handling).

This manual procedure, which as stated is still by far the most widely used, has however certain drawbacks:

a) Resin curing is never total. In reality, what is obtained by the aforesaid method is an object having constant mechanical characteristics up to glass transition temperatures not exceeding 60-70°C.
If total curing and thus a higher glass transition temperature (Tg) are required, the object must be subjected to a hot post-hardening cycle in a mould or to successive gradual heating cycles to prevent deformation of the object at the previously attained Tg. In this case the working time is very long and productivity consequently very low.

b) The final product does not have constant characteristics. The characteristics of a composite material also depend on the fibre/binder ratio and proper fibre impregnation. As the object is manually produced, it is not possible to obtain homogeneous impregnation and constant fibre/binder ratio at every point.

c) Poor environmental hygiene. In spite of attempts to improve the health conditions of working environments by appropriate means, it is practically impossible when working the entire day with fluid resins of high monomer content and low molecular weight to avoid contact with them or breathing their vapour.

d) Material wastage. As the resins used are mostly resins which react at ambient temperature, they have a limited life once ready for use. Thus it is often impossible to apply all the prepared resin, and part of it remains to harden in the drum and then be thrown away.

The pre-impregnation method was therefore developed to improve certain aspects of manual working. With this method the fabric and fibre are pre-impregnated by immersion in a tank containing the impregnation resins, and are then wrung out by various methods to obtain a constant fibre/resin ratio. If a continuous filament is to be pre-impregnated, it is afterwards used continuously by the filament-winding method to form the objects to be produced.

If a fabric is to be pre-impregnated, after wringing out it is passed through an oven to evaporate the solvent if the resin in the tank is in solution and, solvent or not, to advance the curing of the matrix as far as the required degree.

Obviously the temperature to be reached in this stage depends on the type of solvent used and the type of polymer, and also on the degree of hardening to be obtained. The presence of so many parameters to be evaluated makes it difficult to identify the critically optimum conditions. In any event, generally a temperature of 60-120°C is used for a time of 5-10 minutes in the impregnation stage, while generally in the final forming and total curing stage the time is not less than 60 minutes, and sometimes several hours, with a temperature of 120-200°C.

The pre-impregnated but still plastic fabric is collected in rolls, or in sheets if the matrix is sufficiently rigid even if only partially cured.

In all cases these are materials which, because of their formation and the total curing of their matrix with consequent three-dimensional crosslinking, require moulds heated to high temperatures and hardening cycles which are sometimes very complicated and lengthy. For this reason such materials have found wide application where the requirement for high performance and constant quality are such fundamental factors as to make the high production cost of the objects manufactured from them acceptable. In this respect, prepregs are widely used and find ever increasing application in the aeronautics industry, in the high performance sports equipment sector, in prototype construction and in the construction of racing and rally automobiles.

The term "prepreg" generally indicates a material in sheet form (ready for final forming in a mould) which can consist of a synthetic, natural or other (graphite, boron, metal, glass) woven or unwoven fabric, or fibre, which is impregnated with a thermosetting resin cured to prevent migration.

The thermosetting resin forming the matrix is cured as far as so-called reaction stage B. ie to the point at which the resin can still swell if treated with solvent. or soften if heated, but can no longer dissolve in solvents or melt. In spite of their costs, the excellent characteristics of composite materials increasingly attract the attention of technicians and designers even of other less sophisticated industrial sectors involving mass production and the production of large-dimension pieces in which the heating of prepregs creates considerable problems, whether done on a mould or not, and possible applications for them are increasingly sought. However in such cases, an essential factor for their widespread use is the attainment of high productivity.

Commercially available prepregs with a thermosetting matrix however require top lengthy times and too high temperatures for their curing. This does not allow production rates compatible with normal industrial processes.

The currently most advantageous curing times and temperatures in the final forming stage are of the order of 40-80 minutes and 120-130°C.

According to the present invention prepregs can be prepared having characteristics which allow them to be formed into finished pieces at lower temperatures and in shorter times than are currently possible.

In particular, it is possible to reduce the curing times and temperatures of the final forming stage, for equal finished product characteristics, from 40-80 minutes at 120-130°C to 3-5 minutes at the same temperature.

Alternatively, it is possible to maintain the curing time at 40-80 minutes but reduce the temperature to 80°C.

Considering that the forming time for a prepreg in a mould includes a stage in which the curing temperature is reached at a gradient which for example with normally used autoclave forming cycles is about 1°C/minute, the advantage of being able to operate at a temperature 40°C less than the temperature currently used while maintaining the same curing time is immediately obvious. In practice, a productivity increase of 25-60% is obtained for the autoclave used.

A further advantage of the use of a lower final forming temperature (for equal characteristics) for the prepregs according to the present invention derives from the fact that it is possible to produce composite objects which also include expanded polystyrene or PVC which does not withstand a temperature exceeding 90°C.

With the prepregs according to the present invention it is therefore possible to form sandwich panels with their interior in the form of expanded polystyrene or PVC without having to form said panels manually of necessity as is the case in the prior art (and with all the aforesaid defects deriving therefrom).

A further particularly interesting use of the prepregs according to the present invention is that relative to the formation of laminated panels with their interior consisting of glued wooden chips.

In this respect, the use of reduced times and temperatures in the final panel forming stage allows panels to be obtained having high mechanical characteristics without dimensional distortion.

According to one fundamental characteristic, the prepregs of the present invention have a matrix in the form of an epoxy resin containing one or more catalysts chosen from the group consisting of complexes of boron trifluoride with phenylamine, diphenylamine and 4-chlorophenylamine.

Typically, the epoxy resins usable for the present invention comprise all types of epoxy resin normally available commercially having a molecular weight between 300 and 2000 and an epoxide equivalent of between 150 and 1000, and can also be used in mixture.

The quantity of catalyst to be added to the resin is between 3 and 10 parts by weight per 100 parts of epoxy resin.

The catalysts according to the present invention can be used singularly or in mixture.

An important characteristic of the catalysts according to the present invention is that they trigger the epoxy resin curing reaction at different temperatures: whereas diphenylamine is already active at 20°C, phenylamine is active only above 60°C, while 4-chlorophenylamine is active between these temperatures. This catalyst characteristic enables their mixtures to be used by proportioning the individual components so as to already obtain pre-curing of the prepreg matrix to the required degree of consistency by the solvent evaporation stage after impregnating the support.

The resin and catalyst are dissolved in an organic solvent, normally of ketone type and preferably acetone, to obtain a solution having a viscosity and dry substance content as normally used in impregnation plants.

All normally used methods for impregnating prepreg supports can be used with the compositions of the present invention.

If after the impregnation stage the material is to be preformed to obtain a shape similar to the final object and then passed through an oven to progress the matrix to stage B so that the preform is self-supporting, the required consistency is easily obtained by suitably choosing the molecular weight of the resin used, the type or mixture and quantity of catalyst mixed with the resin, and the temperature and retention time in the solvent evaporation oven.

These parameters can be easily identified and

s-- ected by any expert of the art without particular difficulty.

It is apparent that the prepregs according to the present invention represent considerable progress in the preforming art considering that up to the present time this technique has been applied only to unwoven fabrics treated with a size but not impregnated, the matrix forming resin being injected into the mould containing the preform during the final forming stage.

This has therefore resulted in considerable problems of compatibility between the size used for preforming and the resin used for the matrix, in addition to all the limitation deriving from the exclusive use of unwoven fabrics.

In addition to the normally used systems of filament winding and tape winding, with the resin compositions according to the present invention it is possible after impregnation to deposit a fibre or an assembly of fibres, a tape or a braid by means of a heated robotised dispenser head on any mould and in the required directions. This enables fibres to be deposited along the lines of force (eg. isostress) without the limits of currently known technology based on rotation and which obliges certain preferential directions to be followed.

The prepregs according to the present invention can obviously contain all those additives normally used for conferring particular properties on the final object, such as antiflame materials, flame retardants, dyes, inert fillers, or optical stabilizers.

The following examples are given to better illustrate the prepregs according to the present invention, but without in any way implying a limitation thereon.

In the following examples, the term "Specifications 720-E-7781" applies to the sum total of laminate characteristics defined by the Boeing Materials Specifications (BMS).

## EXAMPLE 1

A glass fabric support material is immersed at ambient temperature in a solution in acetone of a bisphenol A epoxy resin of M. W. 500 and epoxide equivalent 250, and a complex of boron trifluoride with phenylamine.

The weight ratio of resin to boron trifluoride complex present in the solution is 100:4.

The resin concentration in the acetone is 75% by weight.

After impregnation, the prepreg is fed into an oven at a temperature of 60-80°C to evaporate the solvent and trigger the reaction to obtain the required degree of stickiness. The time of remaining in the oven is normally 5-8 minutes. The prepreg is then rolled up and preserved in a refrigerator at about -20°C.

Its refrigerator life at -20°C exceeds 6 months, whereas at +20°C it is three-four days.

The mechanical characteristics of a laminate formed from the prepreg with the aforesaid matrix and hardened for one hour at 80°C are of the same order of magnitude, for equal fibre content, as those of a commercially available prepreg hardened for one hour at 120°C, and satisfy specifications 720-E-7781.

In particular the tensile strength exceeds 35 kg.mm$^2$ with a modulus exceeding 2100 kg/mm$^2$ (ASTM D 3039 method).

## EXAMPLE 2

The procedure of Example 1 was repeated but using a 75 % w/w solution in acetone of:
bisphenol A epoxy resin with average molecular weight about 800     100 parts
boron trifluoride/4-chlorophenylamine     0.5
boron trifluoride/phenylamine     3

The mechanical and technical characteristics of the laminate obtained satisfy specifications 720-E-7781.

## EXAMPLE 3

The procedure of Example 1 was repeated but using a solution in acetone of:
novolac epoxy resin with average molecular weight 800 and epoxide equivalent 180     100 parts
boron trifluoride/phenylamine     6

The characteristics of the laminate obtained satisfy specifications 720-E-7781.

The structures obtained have a glass transition temperature T of 140-160°C if hardened for 3 minutes at 120°C.

## EXAMPLE 4

The procedure of Example 1 was repeated but using a solution in acetone of:
bisphenol A epoxy resin with average molecular weight 500 and epoxide equivalent 250     100 parts
boron trifluoride/phenylamine     3
decabromodiphenyloxide     20

The characteristics of the laminate obtained satisfy specifications 720-E-7781.

The structure is also self-extinguishing, satisfying standard FAR 25853.

## EXAMPLE 5

The procedure of Example 1 was repeated but using a solution in acetone of:

bisphenol A epoxy resin with average molecular weight 500 and epoxide equivalent 250    100 parts

boron trifluoride phenylamine    4

red phosphorus    1.5

The characteristics of the laminate obtained satisfy specifications 720-E-7781.

The structure is also self-extinguishing, satisfying standard FAR 25853.

## Claims

1. Prepregs with an epoxide matrix comprising a thermosetting resin of epoxy type having a molecular weight between 300 and 2000 and an epoxide equivalent between 150 and 1000, and one or more catalysts chosen from the group consisting of complexes of boron trifluoride with phenylamine, diphenylamine and 4-chlorophenylamine.

2. Prepregs with an epoxide matrix as claimed in claim 1, characterised in that the weight ratio of resin to catalyst is between 100:3 and 100:10.

3. Prepregs with an epoxide matrix as claimed in claim 1, characterised in that the thermosetting resin of epoxy type is a novolac epoxy resin.

4. Prepregs with an epoxide matrix as claimed in claim 1, characterised in that the thermosetting resin of epoxy type is a halogenated resin.

5. Prepregs with an epoxide matrix as claimed in claim 1, characterised in that antiflame substances, flame retardants, dyes, inert fillers or optical stabilizers are added, either alone or in mixture, to said thermosetting epoxy resin.